# EUROPEAN PATENT SPECIFICATION

(11) **EP 0 787 058 B1**
(45) Date of publication and mention of the grant of the patent: **08.01.2003**
(21) Application number: 95935366.5
(22) Date of filing: 17.10.1995
(51) Int. Cl.: B23K 9/028, B23K 9/16

(54) **DEVICE FOR USE IN JOINING PIPES IN A BUTT-WELDED JOINT**
VORRICHTUNG ZUM STUMPFSCHWEISSEN VON ROHREN
DISPOSITIF UTILISE POUR ASSEMBLER DES TUYAUX PAR SOUDAGE BOUT A BOUT

(30) Priority: 18.10.1994 DK 120594; 18.10.1994 DK 120694
(43) Date of publication of application: 06.08.1997
(73) Proprietor: METALEX A/S, 2880 Bagsvaerd (DK)
(72) Inventor: PEDERSEN, Hans-Joergen, DK-4200 Slagelse (DK)
(74) Representative: Roerboel, Leif
(86) International application number: DK9500415
(87) International publication number: WO96011765

(56) References cited:
- EP-A- 0 308 729
- WO-A-90/06205

## Description

### TECHNICAL FIELD

The present invention relates to a device of the kind set forth in the preamble of claim 1.

### BACKGROUND ART

Similar equipment is disclosed in an article "Gas purging for pipe welding" from "Welding & Metal Fabrication", January/February 1989.

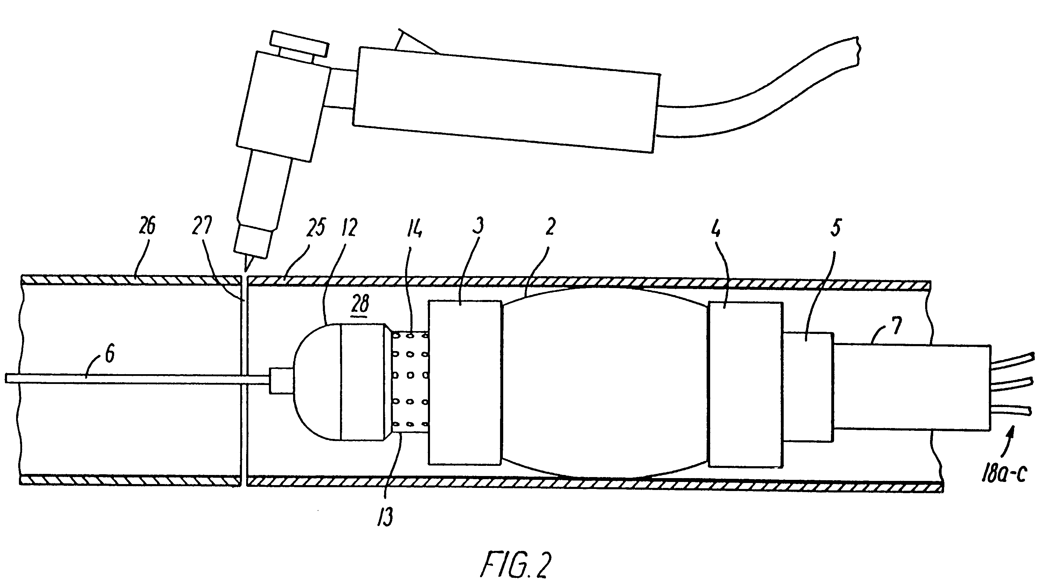

As will be seen especially from Figure 2 in the article, a space of a substantial volume exists between the righthand (upstream) barrier, through which the purge gas is supplied, and the left-hand (downstream) barrier, through which the purge gas flows out and at this location is possibly examined for its oxygen content, the lengths of said space having to be at least 2 x 150 mm in order to avoid the heat of welding damaging the barrier members. A space of such a size will necessarily require a correspondingly large quantity of purge gas to be supplied, and since the stream of purge gas occupies the entire space within the pipes, it must necessarily - if it is also to have a certain cooling effect on the upstream barrier member - have a rather high flow velocity and hence require a correspondingly large quantity of gas per unit time to be supplied. Further, the equipment described in said article is cumbersome in use, since it comprises two barrier members, viz. one for each of the two pipes to be welded together.

### DISCLOSURE OF THE INVENTION

It is on this background the object of the present invention to provide a device of the kind referred to initially, with which it is possible to avoid the waste of time and gas referred to, and this object is achieved according to the present invention by means of the features set forth in the characterizing clause of claim 1.

The effect achieved by the feature set forth in item c of claim 1 is that the purge gas will flow laminarly or quasi-laminarly past the welding site, so that the latter is "rinsed" in such a manner that adsorbed gasses, especially oxygen, are removed from the inside walls of the pipes. A further effect is that the formation of eddies. that could carry unwanted gases into the region of the welding site, is avoided.

The effect of the feature set forth in item d of claim 1 is that the oxygen content at the position referred to will during use always be higher than at the welding site. This means that as soon as it has been ascertained that the oxygen content at said position is equal to or lower than the permissible limiting value, one can be certain that the oxygen content at the welding site does not exceed the limiting value.

The effect of the embodiment set forth in claim 2 is that the barrier member can easily be centered axially in the pipe in question, so that the position, at which the gas sampling or gas sensing device samples gas or senses its content, will be situated centrally in the other pipe and thus facilitate a reliable sampling or sensing of the oxygen content of the gas.

### BRIEF DESCRIPTION OF THE DRAWINGS

In the following detailed portion of the present description, the invention will be explained in more detail with reference to the exemplary embodiment of a rear-gas device according to the invention shown in the drawing, in which
Figure 1 shows the device itself in longitudinal section and the accessory equipment diagrammatically, and
Figure 2 shows the device of Figure 1 placed close to the mutually adjacent ends of two pipes to be welded together, of which the ends are shown in longitudinal section.

### DESCRIPTION OF THE PREFERRED EMBODIMENT

The equipment consists of a main part, "the plug", an adaptor and three flexible gas tubes for connection to the requisite supporting equipment. The plug consists of an aluminium body 1, an expansible tube 2, two conical clamping rings 3 and 4, a union nut 5 and a probe 6.

The adaptor 7 consists of a solid cylinder, one end of which carries three tube connectors 8a, 8b and 8c, and the other end of which comprises three tubular prongs 9a, 9b and 9c in fluid-tight engagement with corresponding sockets 10a, 10b and 10c in the body 1.

Three axially extending ducts 11a, 11b and 11c are bored through the body 1, the adaptor 7 and the prongs 9a-c. The duct 11a serves for supplying gas to the expansible tube 2, while the duct 11b serves for supplying rear gas or backing gas to the welding site, and the duct 11c is connected to the probe 6 with a view to measuring the oxygen content.

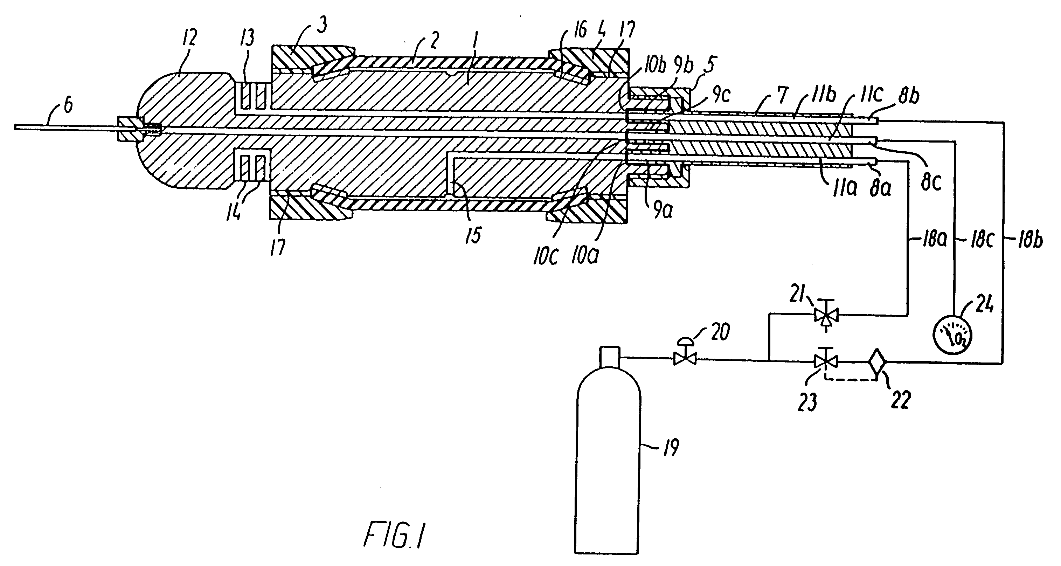

In the forward end - i.e. the end facing towards the left in Figures 1 and 2 - the body 1 is provided with a rounded head 12, the size of which is attuned to the internal diameter of the pipes to be welded, i.e. roughly to the external diameter of the clamping rings 3 and 4, in such a manner that an annular gap 28 of a certain limited radial width is formed between the head 12 and the inside wall of the surrounding pipe.

The probe 6 extends coaxially to the head 12 and is screwed into a threaded hole in the latter.

The head 12 is connected to the body 1 through a neck 13 provided with a large number of radially debouching holes 14, all connected to the rear-gas duct 11b.

In the middle of the body 1, the duct 11a continues in a radial hole 15 debouching on the inside of the expansible tube 2, the ends of which are clamped between internal conical surfaces on the clamping rings 3 and 4 and external conical surfaces 16 with circumferential grooves 16a on the body 1. The clamping rings 3 and 4 are screwed onto the body 1 by means of screw threads 17, so that they can clamp the ends of the expansible tube 2 against the conical surfaces 16 on the outside of the body 1 with their internal conical surfaces 3a and 4a, all conical surfaces preferably having the same conicity.

In the relaxed state, the internal diameter of the expansible tube 2 corresponds to the smallest diameter of the conical surfaces 16, so that the inherent elasticity of the tube will cause it to lie in abutment with or close to said surfaces.

Through the adaptor 7, by a union nut 5 being secured to the body 1, the three ducts 11a, 11b and 11c are connected to three flexible gas tubes 18a, 18b and 18c, respectively.

The gas tube 18a is connected to a three-way valve 21, so that it may optionally be connected to atmosphere or to the outlet side of a reducing valve 20, the inlet side of which is connected to a gas cylinder 19 containing gas of the kind intended for use as rear gas or backing gas in each particular case.

Likewise, the gas tube 18b is connected to the outlet side of the reducing valve 20 through a regulating valve 23 with associated flow sensor 22.

The gas tube 18c is connected to an oxygen-measuring device 24 being adapted such as by means of a pump (not shown) to aspirate gas from the probe 6 to the duct 11c and thus measure the oxygen content in the region immediately surrounding the tip of the probe.

When, c.f. Figure 2, two pipes 25 and 26 are to be welded together at a welding line 27, the rear-gas equipment is inserted into one pipe 25 to such an extent that the tip of the probe 6 will be situated on the opposite side of the welding line 27.

When the rear-gas equipment is inserted in the pipe 25, it is solely the clamping rings 3 and 4 and the expansible tube 2 that will come into contact with the internal surface of the pipe. Since it is contemplated that these parts are to be made of relatively soft materials, such as e.g. PTFE and silicone rubber, respectively, even electro-polished pipes having extremely sensitive internal surfaces will not be scored, and at the same time the equipment may be held securely in the pipe, as will be explained below.

When the equipment has been placed in the manner referred to in the pipe 25, the three-way valve 21 is set to connect the gas tube 18a to the outlet of the reducing valve 20. The pressurized gas from the cylinder 19 will then cause the tube 2 to expand, so that it will clamp the equipment securely and centered in the pipe, the latter at the same time being closed in a completely fluid-tight manner.

Now, the regulating valve 23 is opened, and the gas flow is adjusted by means of the flow sensor 22. This causes gas to flow through the tube 18b, the duct 11b and the radially directed holes 14 out into the space around the neck 13, from where it flows in a laminar or at least quasi-laminar flow through the annular gap 28 towards the welding line 27. Since the gas flow is laminar or quasi-laminar, a large proportion of the oxygen having been adsorbed on the internal surface of the pipes will be removed.

The laminar or quasi-laminar stream of gas continues past the welding line 27 and covers it completely, so that it will not be necessary to establish a counterpressure from the opposite end of the pipe 26. For this reason, the pipe 26 may remain open and hence at atmospheric pressure.

Since the two pipes 25 and 26 are only to be filled with gas in the space between the neck 13 and the tip of the probe 6, the filling may be carried out very rapidly using a very small amount of gas.

If, at this moment, it has not yet been done, the pump associated with the oxygen measuring device 24 is started, so that gas from the tip of the probe 6 is aspirated through the duct 11c and the tube 18c. In this manner, the oxygen content in the pipe 26 on the far side of the welding line 27 is measured, and since the rear gas coming out from the holes 14 and the annular gap 28 flows along the sides of the pipes, the gas in the immediate vicinity of the welding line 27 will always have a lower oxygen content than the gas being aspirated through the probe 6 and measured in the oxygen-measuring device 24. This means that when the oxygen content in the pipe 26 as measured is equal to or less than the limiting value permitted for welding, one can be certain that the oxygen content in the immediate vicinity of the welding line 27 does not exceed the permissible value, and the welding operation may now begin.

When the welding operation is completed, the pipes 25 and 26 having been joined by welding are cooled. Since as described above, the stream of gas flows closely past the walls of the pipes, the welding line and its surroundings will be cooled more rapidly than with conventional rear-gas filling, cf. also the equipment known from the initially mentioned article, in which the stream occupies the whole space within the pipes. After cooling, the three-way valve 20 is opened to atmosphere, and the expansible tube 2 is emptied, so that the equipment may be withdrawn and made ready for the next task. If the next task is to be carried out in pipes of a different dimension, the union nut 5 is unscrewed, after which the adaptor 7 may be secured to a different body 1 having suitable dimensions.

### LIST OF PARTS

- 1: (aluminium) body
- 2: expansible tube
- 3: clamping ring
- 4: clamping ring
- 5: union nut
- 6: probe
- 7: adaptor
- 8a-c: tube connector
- 9a-c: (tubular) prong
- 10a-c: socket
- 11a-c: duct
- 12: head
- 13: neck
- 14: holes
- 15: hole
- 16: conical (sealing) surface
- 16a: groove
- 17: screw thread
- 18a-c: (flexible) gas tube
- 19: gas cylinder
- 20: reducing valve
- 21: three-way valve
- 22: flow sensor
- 23: regulating valve
- 24: oxygen-measuring device
- 25: pipe
- 26: pipe
- 27: welding line/site
- 28: annular gap

## Claims

1. Device for use in joining two pipes in a butt-weld and of the kind comprising
a) a barrier member (1,2) adapted to shut off a part of the internal space of a pipe from another part of same in a substantially fluidum-tight manner,
b) gas supply means (12,13,14) debouching on the side of said barrier member (1,2) intended to face a welding site (27) and being connected or adapted to be connected to a gas supply device (19),
**characterized in**
c) that said gas supply means (12,13,14) comprise a projection (12) placed on said barrier member (1,2) and having a somewhat smaller diameter than the latter, whereas a plurality of nozzles (14) are angularly evenly distributed about the part of said projection situated closest to the barrier member, said nozzles (14) being connected or adapted to be connected to the gas supply device (19), and by
d) a gas sampling or gas sensing member (6) secured to said barrier member and extending to a position at a greater distance from the barrier member (1,2) than said gas supply means (12,13,14) and adapted to sample gas from said position and transfer the sample to a testing apparatus (24) and/or to sense at said position a parameter of importance for the composition of the gas.

2. Device according to claim 1, **characterized in**
a) that the assembly consisting of said barrier member (1,2) and the gas sampling or gas sensing device (6) is substantially rotationally symmetrical, and
b) that said barrier member (1,2) comprises an inflatable wall (2) capable in the inflated state to be pressed in fluid-tight manner against the inner wall of a pipe, said barrier member comprising a body (1) and an inflatable tubular wall (2) of rubber or rubber-like material, in both the non-inflated and the inflated state surrounding the body (1), said wall (2) at each end being secured in a fluid-tight manner to the body (1) by means of a connection comprising two circumferential conical sealing surfaces (16) on the outside of the body (1) as well as two clamping rings (3,4) adapted to embrace the end parts of the wall (2) and press said end parts against said sealing surfaces (16) in a fluid-tight engagement, each clamping ring (3,4) having an internal circumferential conical surface (3a,4a) with substantially the same conicity as said sealing surfaces (16), each ring being adapted to be moved relative to the body (1) in such a direction that the space between said sealing surfaces (16) and said internal conical surfaces (3a,4a) decreases, e.g. by said clamping ring (3,4) being connected to the body (1) through a screw connection (17).

## Patentansprüche

1. Einrichtung für die Verwendung beim Verbinden von zwei Rohren mittels einer Stoßschweißverbindung mit
a) einem Sperrenelement (1, 2), welches dazu ausgestaltet ist, einen Teil des Inneren eines Rohrs von einem anderen Teil davon auf im Wesentlichen fluid-dichte Art und Weise abzuschließen,
b) Gaszuführmitteln (12, 13, 14), die auf der Seite des Sperrenelements (1, 2) hervorbrechen, die zu einer Schweißstelle (27) hinweisen soll, und die mit einer Gaszuführeinrichtung (19) verbunden oder verbindbar sind,
**dadurch gekennzeichnet, dass**
c) die Gaszuführmittel (12, 13, 14) einen Vorsprung (12) aufweisen, der an dem Sperrenelement (1, 2) platziert ist und einen geringeren Durchmesser hat als dieses, wohingegen mehrere Düsen (14) um den Teil des Vorsprungs herum winklig gleichmäßig verteilt sind, der dem Sperrenelement (1, 2) am nächsten ist, wobei die Düsen (14) mit der Gaszuführeinrichtung (19) verbunden oder verbindbar sind, und dass
d) ein Gasprüf- oder Gaserfassungselement (6) vorgesehen ist, welches an dem Sperrenelement angebracht ist und sich bis zu einer Stelle in einem größeren Abstand von dem Sperrenelement (1, 2) erstreckt als die Gaszuführmittel (12, 13, 14), und das dazu angepasst ist, eine Gasprobe von dieser Stelle zu entnehmen und sie an eine Testvorrichtung (24) zu übertragen und/oder an dieser Stelle einen Parameter zu erfassen, der für die Zusammensetzung des Gases von Bedeutung ist.

2. Einrichtung nach Anspruch 1, **dadurch gekennzeichnet, dass**
a) die Anordnung, die aus dem Sperrenelement (1, 2) und der Gasprüf- oder Gaserfassungseinrichtung (6) besteht, im Wesentlichen rotationssymmetrisch ist, und
b) dass das Sperrenelement (1, 2) eine aufblasbare Wand (2) aufweist, die im aufgeblasenen Zustand auf fluid-dichte Art und Weise gegen die innere Wand eines Rohrs drückbar ist, wobei das Sperrenelement einen Körper (1) und eine aufblasbare röhrenförmige Wand (2) aus Gummi oder einem gummiartigen Material aufweist, welche sowohl im nicht-aufgeblasenen als auch im aufgeblasenen Zustand den Körper (1) umgibt, wobei diese Wand (2) an jedem Ende auf fluid-dichte Art und Weise mit dem Körper (1) verbunden ist, und zwar mittels einer Verbindung, die zwei konische Umfangsdichtungsflächen (16) an der Außenseite des Körpers (1) aufweist sowie zwei Klemmringe (3, 4), die die Endteile der Wand (2) umgeben können und diese Endteile in einem fluiddichten Eingriff gegen die Dichtungsflächen (16) drücken können, wobei jeder Klemmring (3, 4) eine innere konische Umfangsfläche (3a, 4a) mit im Wesentlichen der gleichen Konizität aufweist wie die Dichtungsflächen (16), wobei jeder Ring dazu ausgestaltet ist, relativ zu dem Körper (1) in einer solchen Richtung bewegt zu werden, dass der Raum zwischen den Dichtungsflächen (16) und den inneren konischen Flächen (3a, 4a) sich vermindert, beispielsweise dadurch, dass der Klemmring (3, 4) mit dem Körper (1) durch eine Schraubenverbindung (17) verbunden ist.

## Revendications

1. Dispositif destiné à être utilisé pour assembler deux tuyaux par soudage bout à bout du type comprenant :
(a) un élément de barrière (1, 2) adapté pour fermer une partie de l'espace interne d'un tuyau d'une autre partie dudit tuyau d'une manière sensiblement étanche aux fluides,
b) des moyens d'alimentation en gaz (12, 13, 14) débouchant du côté dudit élément de barrière (1, 2) destinés à faire face à un site de soudage (27) et reliés ou adaptés pour être reliés à un dispositif d'alimentation en gaz (19),
caractérisé
c) en ce que lesdits moyens d'alimentation en gaz (12, 13, 14) comprennent une protubérance (12) placée sur ledit élément de barrière (1, 2) et présentant un diamètre quelque peu inférieur à celui de ce dernier, tandis qu'une pluralité de buses (14) sont régulièrement réparties de manière angulaire autour de la partie de ladite protubérance située la plus proche de l'élément de barrière, lesdites buses (14) étant reliées ou adaptées pour être reliées au dispositif d'alimentation en gaz (19), et par
d) un élément d'échantillonnage de gaz ou de détection de gaz (6) fixé audit élément de barrière et s'étendant jusqu'à une position à une plus grande distance de l'élément de barrière (1, 2) que lesdits moyens d'alimentation en gaz (12, 13, 14) et adapté pour prélever un échantillon du gaz à ladite position et transférer l'échantillon vers un appareil de test (24) et/ou pour détecter à ladite position un paramètre important pour la composition du gaz.

2. Dispositif selon la revendication 1, caractérisé
a) en ce que l'assemblage consistant en ledit élément de barrière (1, 2) et le dispositif d'échantillonnage de gaz ou de détection de gaz (6) est sensiblement symétrique en rotation, et
b) en ce que ledit élément de barrière (1, 2) comprend une paroi gonflable (2) capable, dans l'état gonflé, d'être pressée d'une manière étanche aux fluides contre la paroi intérieure d'un tuyau, ledit élément de barrière comprenant un corps (1) et une paroi tubulaire gonflable (2) en caoutchouc ou en un matériau similaire au caoutchouc, à la fois dans l'état non gonflé et dans l'état gonflé entourant le corps (1), ladite paroi (2) à chaque extrémité étant fixée d'une manière étanche aux fluides au corps (1) au moyen d'un raccord comprenant deux surfaces d'étanchéité coniques circonférentielles (16) sur l'extérieur du corps (1) ainsi que deux bagues de serrage (3, 4) adaptées pour encercler les parties d'extrémité de la paroi (2) et presser lesdites parties d'extrémité contre lesdites surfaces d'étanchéité (16) en une mise en prise étanche aux fluides, chaque bague de serrage (3, 4) comportant une surface conique circonférentielle interne (3a, 4a) présentant sensiblement la même conicité que lesdites surfaces d'étanchéité (16), chaque bague étant adaptée pour être déplacée par rapport au corps (1) dans une direction telle que l'espace entre lesdites surfaces d'étanchéité (16) et lesdites surfaces coniques Internes (3a, 4a) diminue, par exemple en reliant ladite bague de serrage (3, 4) au corps (1) par l'intermédiaire d'un raccord à vis (17).
